# EUROPEAN PATENT APPLICATION

(11) **EP 3 813 423 A1**
(43) Date of publication of application: **28.04.2021**
(21) Application number: 19807468.4
(22) Date of filing: 21.05.2019
(51) Int. Cl.: H04W 36/00, H04W 24/10, H04W 36/30

(54) **USER DEVICE AND BASE STATION**

(30) Priority: 23.05.2018 JP 2018099225
(71) Applicant: NTT DoCoMo, Inc., Tokyo 100-6150 (JP)
(72) Inventor: SANO, Yousuke, Tokyo 100-6150 (JP); UMEDA, Hiromasa, Tokyo 100-6150 (JP); TAKAHASHI, Hideaki, Tokyo 100-6150 (JP)
(74) Representative: Hoffmann Eitle
(86) International application number: PCT/JP2019/020110
(87) International publication number: WO 2019/225603

(57) **Abstract**

User equipment includes a control unit that compensates for, by a compensation value related to uplink transmission power capability of the user equipment, a threshold value of a received level that defines a condition for performing measurement for cell selection, and that determines, by the compensated threshold value of the received level, whether the measurement for the cell selection is performed.

## Description

### TECHNICAL FIELD

The present invention relates to user equipment and a base station of a radio communication system.

### BACKGROUND ART

In 3GPP (3rd Generation Partnership Project), a study of a radio communication scheme called 5G or NR (New Radio) has been progressed (the radio communication scheme is referred to as "5G" or "NR," hereinafter), in order to achieve further increase in system capacity, further increase in a data transmission rate, further reduction in latency of a radio section, etc. In 5G, in order to meet a requirement that, while achieving a throughput of 10 Gbps, the latency in the radio section is reduced to be less than or equal to 1 ms, various types of radio technology have been studied.

For LTE (Long Term Evolution), a default UE power class (UE Power Class) for almost all frequency bands has been a class 3 with maximum transmission power of 23 dBm. After release 14, a class 2 that is a UE power class with maximum transmission power of 26 dBm has been specified for several frequency bands, such as a Band 41, a Band 42, etc. (e.g., Non-Patent Document 1). In NR, in addition to the class 3 with the maximum transmission power of 23 dBm, the class 2 that is the UE power class with the maximum transmission power of 26 dBm has been studied, as the default UE power class.

### Related Art Document

### [Non-Patent Document]

Non-Patent Document 1: 3GPP TS 36.101 V15.2.0 (2018-03)
Non-Patent Document 2: 3GPP TS 36.304 V14.5.0 (2018-03)

### SUMMARY OF THE INVENTION

### [PROBLEM TO BE SOLVED BY THE INVENTION]

As described above, coexistence of a plurality of UEs of different power classes is assumed in a cell area.

There is a need for a technique that allows, when a plurality of UEs of different power classes coexists, a UE to appropriately perform a necessary intra-frequency measurement.

### [MEANS FOR SOLVING THE PROBLEM]

According to an aspect of the present invention, there is provided user equipment including a control unit that compensates for, by a compensation value related to uplink transmission power capability of the user equipment, a threshold value of a received level that defines a condition for performing measurement for cell selection, and that determines, by the compensated threshold value of the received level, whether the measurement for the cell selection is performed.

### [ADVANTAGE OF THE INVENTION]

According to the disclosed technique, each UE can be caused to properly perform necessary intra-frequency measurement, while avoid performing unnecessary intra-frequency measurement.

### BRIEF DESCRIPTION OF DRAWINGS

FIG. 1 is a diagram illustrating an example of a configuration of a radio communication system;
FIG. 2 is a diagram illustrating an example of a UE power class;
FIG. 3 is a diagram illustrating an example of a situation in which a serving cell and an adjacent cell are neighboring each other;
FIG. 4 is a diagram illustrating an example of a situation in which a serving cell and an adjacent cell are neighboring each other;
FIG. 5 is a diagram illustrating an example of a functional configuration of a base station apparatus 100;
FIG. 6 is a diagram illustrating an example of a functional configuration of user equipment 200;
FIG. 7 is a diagram illustrating an example of a hardware configuration of the base station apparatus 100 or the user equipment 200; and
FIG. 8 is a diagram illustrating a modified example of a specification.

### [EMBODIMENTS OF THE INVENTION]

In the following, embodiments of the present invention are described by referring to the drawings. The embodiments described below are merely examples, and embodiments to which the present invention is applied are not limited to the embodiment described below.

For operation of a radio communication system according to an embodiment, existing technology can be used as appropriate. The existing technology is, for example, existing LTE. However, the existing technology is not limited to the existing LTE. Unless as otherwise indicated, the "LTE" used in the specification has a broad meaning including LTE-Advanced and a scheme after the LTE-Advanced (e.g., 5G or NR).

In the embodiments described below, terms used in the existing LTE, such as SS (Synchronization Signal), PSS (Primary SS), SSS (Secondary SS), PBCH (Physical broadcast channel), etc., are used. However, this is for convenience of the description, and signals, functions, etc., similar to these may be referred to by other names. The above-described terms in NR are denoted as NR-SS, NR-PSS, NR-SSS, NR-PBCH, etc.

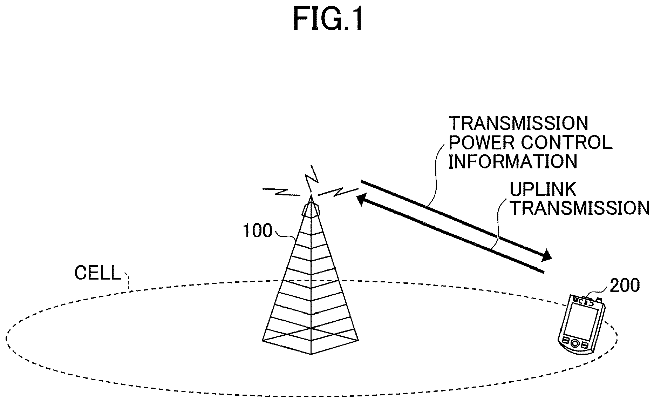

FIG. 1 is a diagram illustrating an example of a configuration of a radio communication system according to an embodiment of the present invention. As illustrated in FIG. 1, the radio communication system according to the embodiment of the present invention includes a base station apparatus 100 and user equipment 200. Although one base station apparatus 100 and one unit of user equipment 200 are illustrated in FIG. 1, this is merely an example, and there may be a plurality of base station apparatuses 100 and a plurality of units of user equipment 200.

The base station apparatus 100 is a communication device that provides one or more cells and that performs radio communication with the user equipment 200. As illustrated in FIG. 1, the base station apparatus 100 transmits, for example, information on transmission power control to the user equipment 200. The information on the transmission power control is, for example, a TPC command transmitted by DCI (Downlink Control Information). By the TPC command, an absolute value or an accumulated value of transmission power of a PUSCH (Physical Uplink Shared Channel) is signalled to the user equipment 200. Furthermore, for example, by a RRC (Radio Resource Control) message, information on maximum transmission power control is signalled to the user equipment 200.

As illustrated in FIG. 1, the user equipment 200 determines transmission power based on the information on the transmission power control, and performs uplink transmission to the base station apparatus 100. Furthermore, as illustrated in FIG. 1, the user equipment 200 may transmit a beamformed uplink transmission signal to the base station apparatus 100. Note that, the uplink transmission means that a control signal, user data, signalling, or any other information is transmitted in an upward direction via an upward direction channel.

Note that, in the embodiments, a duplex scheme may be a TDD (Time Division Duplex) scheme, or a FDD (Frequency Division Duplex) scheme.

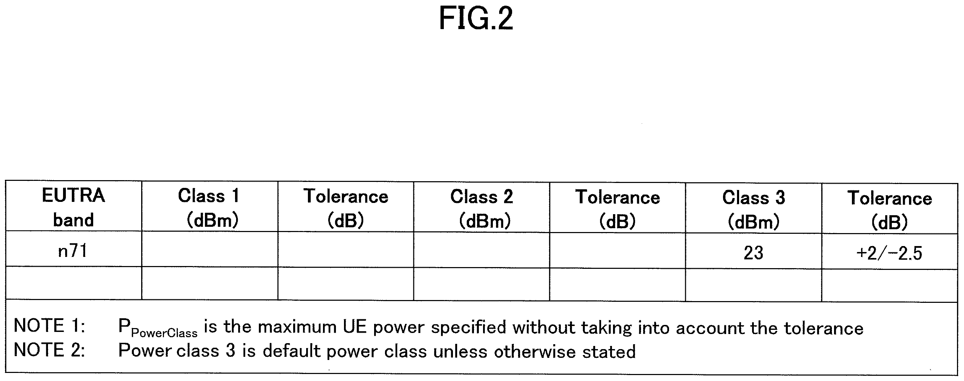

FIG. 2 is a diagram illustrating an example of a UE power class according to an embodiment of the present invention. FIG. 2 shows, as a UE power class, an example in which a class 3 "23(dBm)" and a tolerance "+2/-2.5(dB)" are specified for "n71" that is an EUTRA band. A UE power class specifies, for a transmission band in a channel bandwidth of a NR carrier, maximum transmission power for an uplink transmission by the user equipment 200. Periodicity of measuring transmission power may be at least one sub-frame, i.e., 1 millisecond.

When an Information Element (IE), P_Max, that is less than or equal to 23 dBm is indicated in a cell for user equipment (UE) of the power class 2 operating in an E-UTRA Operating Band 41 (Non-Patent Document 1), a requirement of the power class 2 is not applied, and a requirement of the power class 3 shall be applied.

According to the requirement of Non-Patent Document 1, when a UE supports, for a frequency band supported by LTE other than Operating Band 41, a power class other than a default UE power class of a frequency band and the UE is capable of operating with maximum output power that is higher than maximum output power of a default power class of the supported power class, if an IE P Max is not signalled, the UE shall meet all the requirements for the default power class in an operating frequency band in which the UE operates.

For LTE, a default power class is Power Class 3 (PC3). When a UE that supports high output power (e.g., a PC2 UE) operates in a frequency band other than the Operating Band 41, if no IE P_Max indicating a value greater than 23 dBm is signalled from a base station, maximum output power of the UE that supports high output power is 23 dBm.

A cell measurement criterion for LTE is specified in Non-Patent Document 2. Non-Patent Document 2 describes the following details.

The following rules are applied to a UE to limit necessity of measurements.

If the serving cell fulfils conditions that Srxlev > S_{IntraSearchP} and Squal > S_{IntraSearchQ}, the UE may choose not to perform intra-frequency measurements. Here, Srxlev is a received level value for cell selection (Cell selection RX level value) (dB). S_{IntraSearchP} specifies a threshold value of Srxlev that defines a condition for performing intra-frequency measurement for cell selection (Srxlev threshold) (dB). Squal is a quality value for cell selection (Cell selection quality value) (dB). S_{IntraSearchQ} specifies a threshold value of Squal that defines a condition for performing intra-frequency measurement for cell selection (Squal threshold) (dB).

Otherwise, the UE shall perform intra-frequency measurements.

The UE shall apply the following rules for E-UTRAN inter-frequency and inter-RAT frequency which are indicated in system information.

For E-UTRAN inter-frequency or inter-RAT frequency with a reselection priority higher than the reselection priority of the current E-UTRA frequency, the UE shall perform measurements of higher priority E-UTRAN inter-frequency or inter-RAT frequency.

For an E-UTRAN inter-frequency with an equal or lower reselection priority than the reselection priority of the current E-UTRA frequency and for inter-RAT frequency with lower reselection priority than the reselection priority of the current E-UTRAN frequency, if the serving cell fulfils the conditions, Srxlev > S_{nonIntraSearchP} and Squal > S_{nonIntraSearchQ}, the UE may choose not to perform measurements of E-UTRAN inter-frequency or inter-RAT frequency of equal or lower priority unless the UE is triggered to measure E-UTRAN inter-frequency which is configured with *redistributionInterFreqInfo.* Otherwise, the UE shall perform measurements of E-UTRAN inter-frequency or inter-RAT frequency of equal or lower priority. Here, S_{nonIntraSearchP} specifies a threshold value of a received level value (Srxlev) that defines a condition for performing E-UTRAN inter-frequency measurement and inter-RAT measurement for cell selection (Srxlev threshold) (dB).

If the UE supports relaxed monitoring and s-SearchDeltaP is present in SystemInformationBlockType3, the UE may further limit required measurements. Here, S-SearchDeltaP is a parameter that applies only to the UE supporting the relaxed monitoring. For example, the value dB6 corresponds to 6 dB and the value dB9 corresponds to 9 dB.

Furthermore, the following cell reselection criterion is described in Non-Patent Document 2.

In normal coverage, the cell selection criterion S is met if Srxlev > 0 and Squal > 0. Here, Srxlev satisfies the following: Srxlev = Qrxlevmeas - (Qrxlevmin + Qrxlevminoffset) - Pcompensation - Qoffsetₜₑₘₚ. Furthermore, Squal satisfies the following: Squal = Qqualmeas - (Qqualmin + Qqualminoffset) - Qoffsetₜₑₘₚ.

Furthermore, Srxlev is a received level value for cell selection (Cell selection RX level value) (dB). Squal is a quality value for cell selection (Cell selection quality value) (dB). Qoffsetₜₑₘₚ is an offset temporarily applied to a cell (dB). Qrxlevmeas is a measured cell received (RX) level value (RSRP). Qqualmeas is a measured cell quality value (RSRQ). Qrxlevmin is a minimum required received (RX) level in the cell (dBm). Qqualmin is a minimum required quality level in the cell (dB). Qrxlevminoffset is an offset to the signalled Qᵣₓₗₑᵥₘᵢₙ considered in the Srxlev evaluation as a result of a periodic search for a higher priority PLMN while camped normally in a VPLMN. Qqualminoffset is an offset to the signalled Q_{qualmin} taken considered in the Squal evaluation as a result of a periodic search for a higher priority PLMN while camped normally in a VPLMN. Pcompensation is a compensation value related to UE uplink transmission power capability. If the UE supports the *additionalPmax* in the *NS-PmaxList,* if present, in SIB1, SIB3 and SIB5, Pcompensation is max (P_{EMAX1}-P_{PowerClass}, 0) - (min(P_{EMAX2}, P_{PowerClass}) - min(P_{EMAX1}, P_{PowerClass})) (dB); else, Pcompensation is max(P_{EMAX1}-P_{PowerClass}, 0) (dB). P_{EMAX1} and P_{EMAX2} are maximum transmission (TX) power level an UE may use when transmitting on the uplink in the cell (dBm). P_{PowerClass} is maximum radio frequency (RF) output power of the UE according to the UE power class.

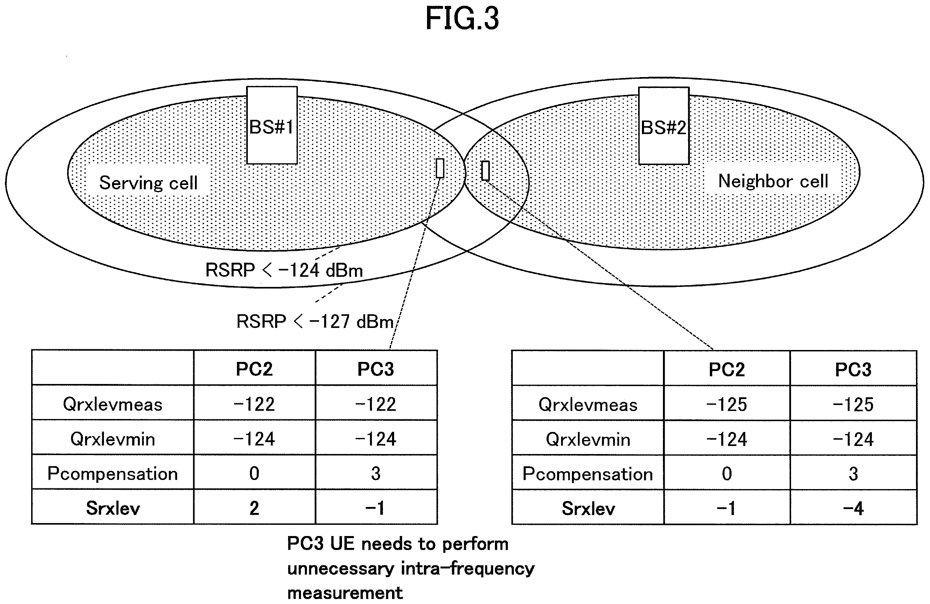

As an example, a situation is considered such that, as illustrated in FIG. 3, a serving cell (Serving Cell) of BS#1 and a neighboring cell (Neighboring Cell) of BS#2 are adjacent.

Suppose that P_Max = 26 is broadcasted from the base station. Furthermore, suppose that a simplified cell selection criterion is applied (Qrxlevminoffset, etc., of Non-Patent Document 2 is set to 0). Namely, suppose that Srxlev = Qrxlevmeas(RSRP) - Qrxlevmin - Pcompensation. Suppose that Qrxlevmin = -124 dBm is broadcasted (suppose that the cell edge of PC 3 is - 124 dBm). Furthermore, suppose that S_{IntraSearchP} = 0 dBm.

Under the above-described assumptions, a situation is considered such that, as illustrated in FIG. 3, the serving cell (Serving Cell) of the BS#1 and the neighboring cell (Neighboring Cell) of the BS#2 are adjacent. In this case, when a PC2 UE is included in the serving cell and included in the neighboring cell, for example, if Qrxlevmeas is -122 dBm, since Qrxlevmin = -124 dBm and Pcompensation = 0, Srxlev = 2 is obtained. Additionally, in this case, when a PC3 UE is included in the serving cell and included in the neighboring cell, if Qrxlevmeas is -122 dBm, since Qrxlevmin = -124 dBm and Pcompensation = 3, Srxlev = -1 is obtained. In this case, the PC3 UE is required to perform unnecessary intra-frequency measurement.

Furthermore, under the above-described assumptions, the situation is considered such that, as illustrated in FIG. 3, the serving cell (Serving Cell) of the BS#1 and the neighboring cell (Neighboring Cell) of the BS#2 are adjacent. In this case, when a PC2 UE is included in the neighboring cell and included in an edge of the serving cell, for example, if Qrxlevmeas is -125 dBm, since Qrxlevmin = -124 dBm and Pcompensation = 0, Srxlev = -1 is obtained. Additionally, in this case, when a PC3 UE is included in the serving cell and included in an edge of the neighboring cell, if Qrxlevmeas is -125 dBm, since Qrxlevmin = -124 dBm and Pcompensation = 3, Srxlev = -4 is obtained.

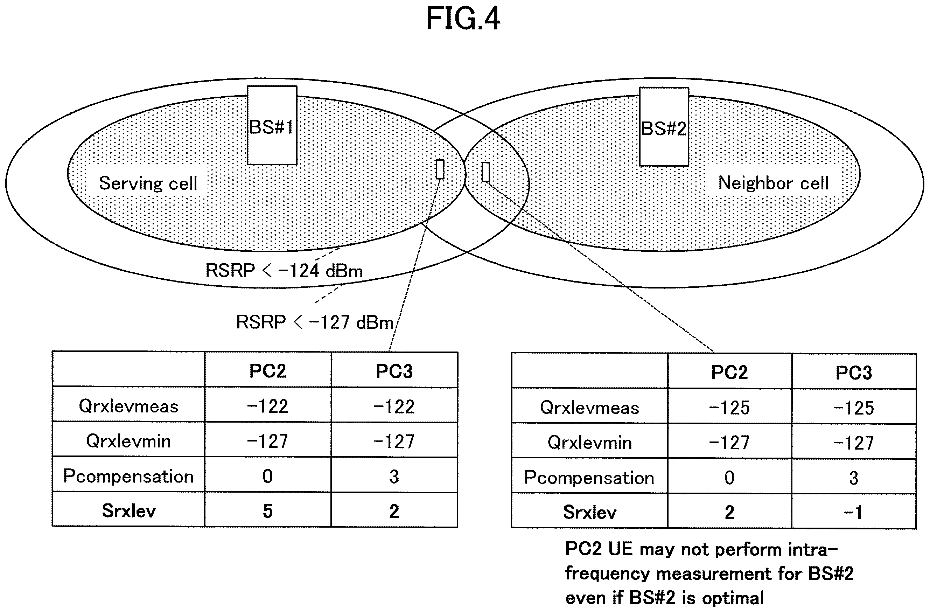

Next, as another example, a situation is considered such that, as illustrated in FIG. 4, a serving cell (Serving Cell) of BS#1 and a neighboring cell (Neighboring Cell) of BS#2 are adjacent.

Suppose that P_Max = 26 is broadcasted from the base station. Furthermore, suppose that a simplified cell selection criterion is applied (Qrxlevminoffset, etc., of Non-Patent Document 2 is set to 0). Namely, suppose that Srxlev = Qrxlevmeas(RSRP) - Qrxlevmin - Pcompensation. Suppose that Qrxlevmin = -127 dBm is broadcasted (suppose that the cell edge of PC 3 is - 124 dBm). Furthermore, suppose that S_{IntraSearchP} = 0 dBm.

Under the above-described assumptions, a situation is considered such that, as illustrated in FIG. 4, the serving cell (Serving Cell) of the BS#1 and the neighboring cell (Neighboring Cell) of the BS#2 are adjacent. In this case, when a PC2 UE is included in the serving cell and included in an edge of the neighboring cell, for example, if Qrxlevmeas is -122 dBm, since Qrxlevmin = -127 dBm and Pcompensation = 0, Srxlev = 5 is obtained. Additionally, in this case, when a PC3 UE is included in the serving cell and included in the edge of the neighboring cell, if Qrxlevmeas is -122 dBm, since Qrxlevmin = -127 dBm and Pcompensation = 3, Srxlev = 2 is obtained.

Furthermore, under the above-described assumptions, the situation is considered such that, as illustrated in FIG. 4, the serving cell (Serving Cell) of the BS#1 and the neighboring cell (Neighboring Cell) of the BS#2 are adjacent. In this case, when a PC2 UE is included in the neighboring cell and included in an edge of the serving cell, for example, if Qrxlevmeas is -125 dBm, since Qrxlevmin = -127 dBm and Pcompensation = 0, Srxlev = 2 is obtained. Additionally, in this case, when a PC3 UE is included in the serving cell and included in the edge of the neighboring cell, if Qrxlevmeas is -125 dBm, since Qrxlevmin = -127 dBm and Pcompensation = 3, Srxlev = -1 is obtained. Namely, the PC2 UE may perform intra-frequency measurement for BS#2 (for example, if the intra-frequency measurement for BS#2 is optional).

Namely, the cell selection criterion described in Non-Patent Document 2 does not assume a situation such that, when a cell area is designed to be 23 dBm, a PC2 UE (maximum transmission output is 26 dBm) and a PC3 UE (maximum transmission output is 23 dBm) coexist in the cell area. Accordingly, in the above-described situation, the cell selection criterion (specifically, the value of Srxlev) differs for each Power Class. Due to the difference in the cell selection criterion for each Power Class, unnecessary intra-frequency measurement may be caused, and necessary intra-frequency measurement may not be performed. However, for an isolated cell for which no neighboring cell exists, there is no problem for the above-described operation. Accordingly, it can be considered to modify the cell selection criterion, so that, even under an environment in which a plurality of UEs of different Power Classes coexists, as described above, intra-frequency measurement can be appropriately performed.

### (Method 1)

Currently, S_{IntraSearchP} that specifies a threshold value of a received level value (Srxlev) that defines a condition for performing intra-frequency measurement for cell selection (Srxlev threshold) (dB) is set to the same value and signalled, regardless of the Power class. Additionally, S_{nonIntraSearchP} that specifies a threshold value (Srxlev threshold) (dB) of a received level value (Srxlev) that defines a condition for performing E-UTRAN inter-frequency measurement and inter-RAT measurement for cell selection is set to the same value and signalled, regardless of a Power Class. In this regard, it can be considered to configure S_{IntraSearchP} that specifies a threshold value (Srxlev threshold) (dB) of a received level value (Srxlev) that defines a condition for performing intra-frequency measurement for cell selection and S_{nonIntraSearchP} that specifies a threshold value (Srxlev threshold) (dB) of a received level value (Srxlev) that defines a condition for performing E-UTRAN inter-frequency measurement and inter-RAT measurement for cell selection for each Power Class so as to be signalled. In this case, though a Srxlev value varies for each Power Class, a trigger for intra-frequency measurement also varies for each Power Class.

### (Method 2)

Currently, Qrxlevmin that is the minimum required received level (dBm) in a cell is set to the same value and signalled, regardless of a Power Class. Furthermore, Qrxlevminoffset that is an offset to Qrxlevmin, which is the minimum required received level (dBm) in a reported cell, considering the Srxlev evaluation as a result of periodic search of PLMN with higher priority when normally camping on a VPLMN, is set to the same value and signalled, regardless of a Power Class. In this regard, it can be considered to configure Qrxlevmin and Qrxlevminoffset for each Power Class to be signalled. According to this method, the Srxlev value can be the same among a plurality of Power Classes, so that necessary intra-frequency measurement can be appropriately performed, while preventing unnecessary intra-frequency measurement from being performed.

### (Method 3)

Furthermore, as another method, it can be considered to configure Qoffsetₜₑₘₚ, which is an offset (dB) temporarily applied to a cell, to be a different value for each PC. Namely, by configuring Qoffsetₜₑₘₚ to be a different value for each PC, the Srxlev value can be the same value among a plurality of Power Classes, as a result. For example, for a UE of Power Class 2 and a UE of Power Class 3, Qoffsetₜₑₘₚ = -Pcompensation.

### (Method 4)

A base station may broadcast or signal, by RRC signalling, information indicating whether a serving cell is an isolated cell to a UE. For example, a value of Qoffsetₜₑₘₚ, which is an offset (dB) temporarily applied to a cell, may be switched according to whether a serving cell is an isolated cell. For example, when a serving cell is an isolated cell, the above-described broadcast or RRC signaling may not be made. In this case, the value of Qoffsetₜₑₘₚ may be 3 dB as before. In this regard, when a serving cell is not an isolated cell, the above-described broadcast or RRC signalling may be made, and, in this case, a value of Qoffsetₜₑₘₚ may be -Pcompensation.

### (Method 5)

Furthermore, as another method, by newly adding an offset value to a Srxlev value, the Srxlev value can be the same value among a plurality of Power Classes. For example, for a UE of Power Class 2 and a UE of Power Class 3, an offset value for obtaining Qoffsetₜₑₘₚ = -Pcompensation may be subtracted from an existing Srxlev value.

### (Method 6)

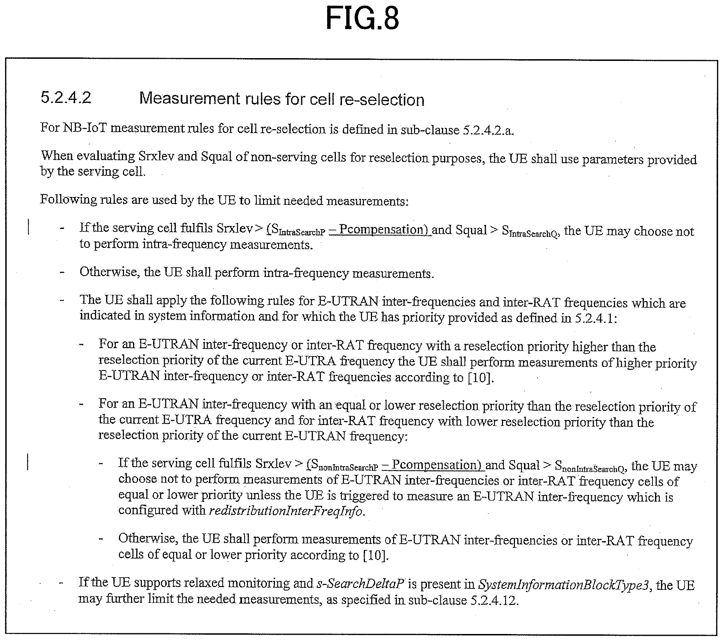

Furthermore, as another method, as illustrated in FIG. 8, S_{IntraSearchP} that specifies a threshold value (Srxlev threshold) (dB) of a received level value (Srxlev) that defines a condition for performing intra-frequency measurement for cell selection and S_{nonIntraSearchP} that specifies a threshold value (Srxlev threshold) (dB) of a received level value (Srxlev) that defines a condition for performing E-UTRAN inter-frequency measurement and inter-RAT measurement for cell selection may be compensated by Pcompensation, which is a compensation value related to user equipment UE's uplink transmission power capability. In this case, a determination may be made as to whether the above-described compensation is performed by the user equipment by signaling according to the method 4. Namely, the following example can be considered.

A base station signals, to user equipment, information indicating whether a serving cell is an isolated cell via broadcasting or RRC signaling. In response to detecting the broadcasting or RRC signaling, the user equipment compensates for, by Pcompensation, which is a compensation value related to user equipment UE's uplink transmission power capability, S_{IntraSearchP} that specifies a threshold value (Srxlev threshold) (dB) of a received level value (Srxlev) that defines a condition for performing intra-frequency measurement for cell selection and S_{nonIntraSearchP} that specifies a threshold value (Srxlev threshold) (dB) of a received level value (Srxlev) that defines a condition for performing E-UTRAN inter-frequency measurement and inter-RAT measurement for cell selection. Specifically, S_{IntraSearchP} prior to compensation may be compensated to be S_{IntraSearchP} - Pcompensation, and S_{nonIntraSearchP} may be compensated to be S_{nonIntraSearchP} - P_{compensation}. When a serving cell is an isolated cell, the base station does not perform the above-described broadcasting or RRC signaling. In this case, the user equipment does not compensate for S_{IntraSearchP} that specifies a threshold value (Srxlev threshold) (dB) of a received level value (Srxlev) that defines a condition for performing intra-frequency measurement for cell selection and S_{nonIntraSearchP} that specifies a threshold value (Srxlev threshold) (dB) of a received level value (Srxlev) that defines a condition for performing E-UTRAN inter-frequency measurement and inter-RAT measurement for cell selection.

### (Device configuration)

Next, examples of functional configurations of the base station apparatus 100 and the user equipment 200 are described, which perform the above-described processes and operations. The base station apparatus 100 and the user equipment 200 include functions for implementing the above-described embodiments. However, each of the base station apparatus 100 and the user equipment 200 may include only a part of the functions of the embodiments.

### <Base station apparatus 100>

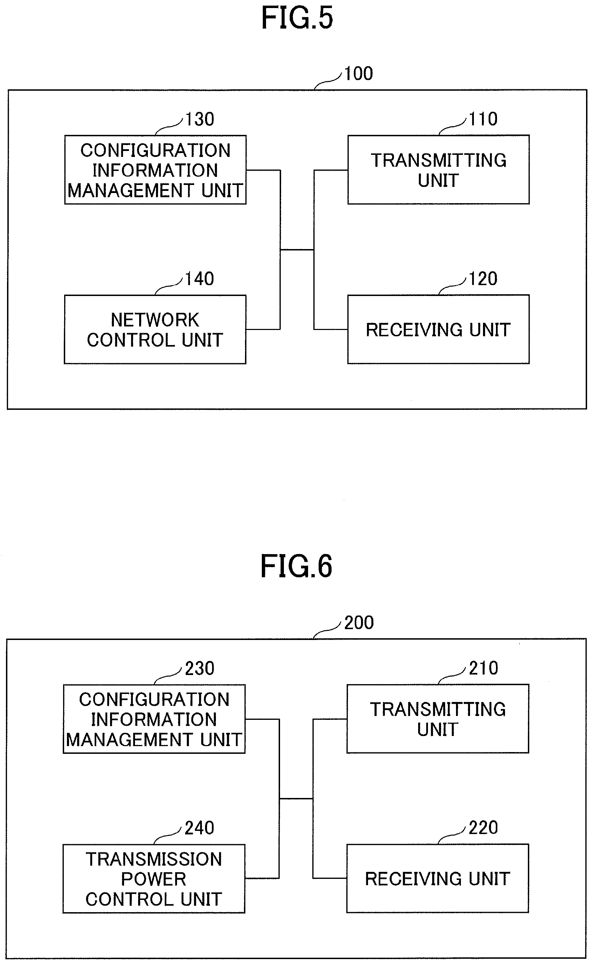

FIG. 5 is a diagram illustrating an example of a functional configuration of the base station apparatus 100. As illustrated in FIG. 5, the base station apparatus 100 includes a transmitting unit 110; a receiving unit 120; a configuration information management unit 130; and a network control unit 140. The functional configuration illustrated in FIG. 5 is merely an example. A functional division and a name of a functional unit may be any division and any name, provided that the operations according tot the embodiments of the present invention can be executed.

The transmitting unit 110 has a function for generating a signal to be transmitted to the user equipment 200 and for wirelessly transmitting the signal. The receiving unit 120 has a function for receiving various types of signals transmitted from the user equipment 200 and for retrieving, for example, higher layer information from the received signals. Furthermore, the transmitting unit 110 has a function for transmitting, to the user equipment 200, S_{IntraSearchP}, S_{nonIntraSearchP}, Qrxlevmin, Qrxlevminoffset, Qoffsetₜₑₘₚ, information indicating whether a serving cell is an isolated cell, an offset value, etc.

The configuration information management unit 130 stores preconfigured configuration information and various types of configuration information to be transmitted to the user equipment 200. The content of the configuration information is, for example, information related to transmission power control, etc.

The network control unit 140 configures S_{IntraSearchP} and S_{nonIntraSearchP} for each Power Class to be stored in the configuration information management unit 130. Furthermore, the network control unit 140 configures Qrxlevmin and Qrxlevminoffset for each Power Class to be stored in the configuration information management unit 130. Furthermore, the network control unit 140 configures Qoffsetₜₑₘₚ as different values for respective PCs to be stored in the configuration information management unit 130. Furthermore, the network control unit 140 configures information indicating whether a serving cell is an isolated cell to be stored in the configuration information management unit 130. Furthermore, the network control unit 140 calculates, for each PC, an offset value of a Srxlev value for obtaining Qoffsetₜₑₘₚ = -Pcompensation to be stored in the configuration information management unit 130.

### <User equipment 200>

FIG. 6 is a diagram illustrating an example of a functional configuration of the user equipment 200. As illustrated in FIG. 6, the user equipment 200 includes a transmitting unit 210; a receiving unit 220; a configuration information management unit 230; and a transmission power control unit 240. The functional configuration illustrated in FIG. 6 is merely an example. A functional division and a name of a functional unit may be any division and any name, provided that the operations according to the embodiment of the present invention can be executed.

The transmitting unit 210 creates a transmission signal from transmission data and wirelessly transmits the transmission signal. The receiving unit 220 wirelessly receives various types of signals, and retrieves higher layer signals from received physical layer signals. Furthermore, the receiving unit 220 has a function for receiving S_{IntraSearchP}, S_{nonIntraSearchP}, Qrxlevmin, Qrxlevminoffset, Qoffsetₜₑₘₚ, information indicating whether a serving cell is an isolated cell, an offset value, etc., transmitted from the base station apparatus 100.

The configuration information management unit 230 stores various types of configuration information received from the base station apparatus 100 by the receiving unit 220. Furthermore, the configuration information management unit 230 stores previously configured configuration information. Content of the configuration information is, for example, information related to transmission power configuration, etc.

The transmission power control unit 240 performs control related to transmission power configuration in the user equipment 200, which is described in the embodiments. Note that a functional unit related to signal transmission in the transmission power control unit 240 may be included in the transmitting unit 210, and a functional unit related to signal reception in the transmission power control unit 240 may be included in the receiving unit 220.

### (Hardware configuration)

The functional configuration diagrams (FIG. 5 and FIG. 6) used for the descriptions of the above-described embodiments represent blocks on a function-by-function basis. These functional blocks (components) are implemented by any combination of hardware and/or software. Here, a means for implementing each functional block is not particularly limited. Namely, each functional block may be implemented by one device that is physically and/or logically combined, or may be implemented by a plurality of devices that is obtained by directly and/or indirectly (e.g., wired and/or wireless) connecting two or more devices that are physically and/or logically separated.

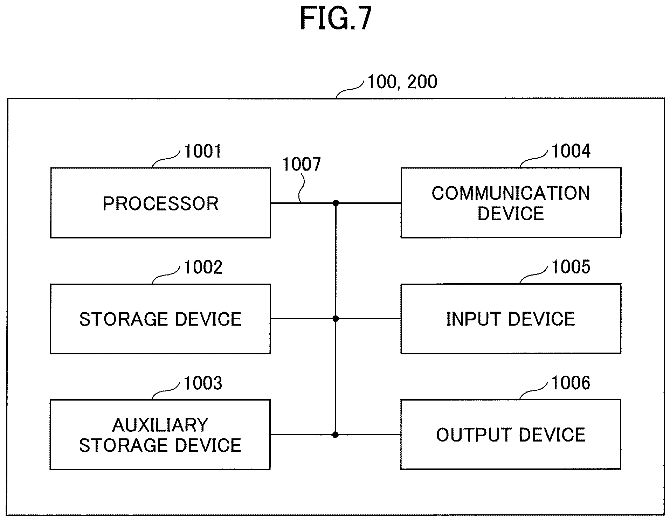

For example, the base station apparatus 100 and the user equipment 200 according to the embodiments of the present invention may function as computers for executing processes of the embodiments of the present invention. FIG. 7 is a diagram illustrating an example of a hardware configuration of the base station apparatus 100 or the user equipment 200 according to the embodiments of the present invention. Each of the above-described base station apparatus 100 and the user equipment 200 may be physically configured as a computer device including a processor 1001, a storage device 1002, an auxiliary storage device 1003, a communication device 1004, an input device 500, an output device 1006, a bus 1007, etc.

Note that, in the following description, the term "apparatus" can be read as a circuit, a device, a unit, etc. The hardware configuration of each of the base station apparatus 100 and the user equipment 200 may be configured to include one or more of the respective depicted devices indicated by 1001-1006, or may be configured not to include a part of the devices.

Each function of the base station apparatus 100 and the user equipment 200 is implemented by loading predetermined software (program) on hardware, such as the processor 1001 and the storage device 1002, so that the processor 1001 performs computation and controls communication by the communication device 1004, and reading and/or writing of data in the storage device 1002 and the auxiliary storage device 1003.

The processor 1001, for example, operates an operating system to control the entire computer. The processor 1001 may be configured with a central processing unit (CPU: Central Processing Unit) including an interface with a peripheral device, a control device, a processing device, a register, etc.

Additionally, the processor 1001 reads a program (program code), a software module and data from the auxiliary storage device 1003 and/or the communication device 1004 to the storage device 1002, and executes various processes according to these. As the program, a program is used which causes a computer to execute at least a part of the operations described in the above-described embodiments. For example, the transmitting unit 110, the receiving unit 120, the configuration information management unit 130, the network control unit 140 of the base station apparatus 100 illustrated in FIG. 5 may be implemented by a control program stored in the storage device 1002 and executed by the processor 1001. Furthermore, for example, the transmitting unit 210, the receiving unit 220, the configuration information management unit 230, the transmission power control unit 240 of the user equipment 200 illustrated in FIG. 6 may be implemented by a control program stored in the storage device 1002 and executed by the processor 1001. Although it is described that the above-described various processes are executed by a single processor 1001, the above-described various processes may be simultaneously or sequentially executed by two or more processors 1001. The processor 1001 may be implemented with one or more chips. Note that the program may be transmitted from a network via an electric communication line.

The storage device 1002 is a computer readable recording medium, and the storage device 1002 may be formed of at least one of ROM (Read Only Memory), EPROM (erasable programmable ROM), EEPROM (Electrically Erasable Programmable ROM), RAM (Random Access Memory), etc. The storage device 1002 may be referred to as a register, a cache, a main memory (main storage device), etc. The storage device 1002 can store executable programs (program codes), software modules, etc., that can be executed to implement the processes according to the embodiments of the present invention.

The auxiliary storage device 1003 is a computer readable recording medium, and, for example, the auxiliary storage device 1003 may be formed of at least one of an optical disk such as a CD-ROM (Compact Disc ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, etc. The above-described storage medium may be, for example, a database including the storage device 1002 and/or the auxiliary storage device 1003, a server, or any other suitable medium.

The communication device 1004 is hardware (transmission/reception device) for performing communication between computers via a wired and/or wireless network, and, for example, the communication device 1004 is also referred to as a network device, a network controller, a network card, a communication module, etc. For example, the transmitting unit 110 and the receiving unit 120 of the base station apparatus 100 may be implemented by a communication device 1004. Furthermore, the transmitting unit 210 and the receiving unit 220 of the user equipment 200 may be implemented by a communication device 1004.

The input device 1005 is an input device (e.g., a keyboard, a mouse, a microphone, a switch, a button, a sensor, etc.) for receiving an input from outside. The output device 1006 is an output device (e.g., display, speaker, LED lamp, etc.) that performs output toward outside. Note that the input device 1005 and the output device 1006 may be integrated (for example, a touch panel).

Furthermore, the devices, such as the processor 1001 and the storage device 1002, are connected by a bus 1007 for communicating information. The bus 1007 may be formed of a single bus, or the bus 1007 may be formed of buses that are different among the devices.

Furthermore, each of the base station apparatus 100 and the user equipment 200 may be configured to include hardware, such as a microprocessor, a digital signal processor (DSP: Digital Signal Processor), an ASIC (Application Specific Integrated Circuit), a PLD (Programmable Logic Device), an FPGA (Field Programmable Gate Array), etc., and a part or all of the functional blocks may be implemented by the hardware. For example, the processor 1001 may be implemented with at least one of these hardware components.

### (Conclusion of the embodiments)

As described above, according to the embodiments of the present invention, there is provided a base station including a control unit that configures, for each power class, S_{IntraSearchP} that specifies a threshold value (Srxlev threshold) (dB) of a received level value (Srxlev) that defines a condition for performing intra-frequency measurement for cell selection and S_{nonIntraSearchP} that specifies a threshold value (Srxlev threshold) (dB) of a received level value (Srxlev) that defines a condition for performing E-UTRAN inter-frequency measurement and inter-RAT measurement for cell selection; and a transmitting unit that transmits, to the user equipment, the S_{IntraSearchP} and the S_{nonIntraSearchP} that are configured for each power class.

According to the above-described configuration, the base station apparatus 100 configures the Srxlev value to be different values for respective power classes; however, triggers for intra-frequency measurement also differ for the respective power classes. As a result, necessary intra-frequency measurement is appropriately performed, and unnecessary intra-frequency measurement can be prevented from being performed.

The control unit may configure, for each power class, a minimum required received level Qrxlevmin (dBm) in a cell and Qrxlevminoffset that is an offset to the Qrxlevmin, which is the minimum required received level (dBm) in the reported cell, considering the Srxlev evaluation as a result of periodic search of PLMN with higher priority when normally camping on a VPLMN, and the transmitting unit may transmit, to the user equipment, the configured Qrxlevmin and Qrxlevminoffset. According to the above-described configuration, the Srxlev value can be a same value among the plurality of power classes, so that necessary intra-frequency measurement can be appropriately performed, and unnecessary intra-frequency measurement can be prevented from being performed.

The control unit may configure, for each power class, Qoffsetₜₑₘₚ that is an offset (dB) temporarily applied to a cell, so that a Srxlev value becomes a same value among the plurality of power classes. According to the above-described configuration, for example, by setting Qoffsetₜₑₘₚ = -Pcompensation for a UE of Power Class 2 and a UE of Power Class 3, the Srxlev value can be configured to be the same value between Power Class 2 and Power Class 3.

The control unit may configure information indicating whether a cell of the base station is an isolated cell, and the configured information may be transmitted to the user equipment. For example, when a cell of the base station is an isolated cell, the above-described notification may not be made. In this case, the value of Qoffsetₜₑₘₚ may be 3 dB as before. In this regard, when the serving cell is not an isolated cell, the above-described notification is made, and, in this case the value of Qoffsetₜₑₘₚ may be set to be -Pcompensation.

The control unit may configure an offset value of a Srxlev value, so that the Srxlev value becomes a same value among the plurality of power classes.

For example, for a UE of Power Class 2 and a UE of Power Class 3, an offset value for obtaining Qoffsetₜₑₘₚ = -Pcompensation can be subtracted from an existing Srxlev value.

Furthermore, according to the embodiments of the present invention, there is provided a base station including a control unit that compensates for, by a compensation value related to uplink transmission power capability of user equipment, a threshold value of a received level that defines a condition for performing measurement for cell selection; and a transmitting unit that transmits, to the user equipment, the compensated threshold value of the received level. According to the configuration described above, necessary intra-frequency measurement can be made properly, and unnecessary intra-frequency measurements can be avoided. The cell selection described above may be cell reselection.

The compensated threshold value of the received level may be a value obtained by subtracting, from the threshold value of the received level, the compensation value related to the uplink transmission power capability of the user equipment.

The control unit may configure information indicating whether a cell of the base station is an isolated cell, and the transmitting unit may transmit the configured information to the user equipment.

When the cell of the base station is not an isolated cell, the control unit may compensate the threshold value of the received level by the compensation value, and the transmitting unit may transmit, to the user equipment, information indicating that the cell of the base station is not an isolated cell.

When the cell of the base station is an isolated cell, the control unit may avoid compensating the threshold value of the received level, and the transmitting unit may avoid transmitting, to the user equipment, the information indicating whether the cell of the base station is the isolated cell.

Furthermore, according to the embodiments of the present invention, there is provided user equipment including a control unit that compensates for, by a compensation value related to uplink transmission power capability of the user equipment, a threshold value of a received level that defines a condition for performing measurement for cell selection, and that determines, by the compensated threshold value of the received level, whether the measurement for the cell selection is performed. According to the configuration described above, necessary intra-frequency measurement can be made properly, and unnecessary intra-frequency measurement can be avoided. The cell selection described above may be cell reselection.

The compensated threshold value of the received level may be a value obtained by subtracting, from the threshold value of the received level, the compensation value related to the uplink transmission power capability of the user equipment.

The user equipment may further include a receiving unit that receives information indicating whether a cell of a base station is an isolated cell.

In response to receiving, by the receiving unit, information indicating whether the cell of the base station is the isolated cell, the control unit may compensate the threshold value of the received level by the compensation value related to the uplink transmission power capability of the user equipment.

When the receiving unit does not receive the information indicating whether the cell of the base station is the isolated cell, the control unit may avoid compensating the threshold value of the received level.

### (Supplements of Embodiments)

The embodiments of the present invention are described above, but the disclosed invention is not limited to the above embodiments, and those skilled in the art would appreciate various modified examples, revised examples, alternative examples, substitution examples, and so forth. In order to facilitate understanding of the invention, specific numerical value examples are used for description, but the numerical values are merely examples, and certain suitable values may be used unless as otherwise stated. The classification of items in the above description is not essential to the present invention. Matters described in two or more items may be combined and used as necessary, and a matter described in one item may be applied to a matter described in another item (provided that they do not contradict). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the procedures described in the embodiments, the order may be changed as long as there is no inconsistency. For the sake of convenience of processing description, the base station apparatus 100 and the user equipment 200 are described using the functional block diagrams, but such devices may be implemented by hardware, software, or a combination thereof. Software executed by the processor included in the base station apparatus 100 according to the embodiments of the present invention and software executed by the processor included in the user equipment 200 according to the embodiments of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Notification of information is not limited to the aspect/embodiments described in the present specification, and may be performed by other methods. For example, notification of information may be performed via physical layer signaling (for example, Downlink Control Information (DCI) or Uplink Control Information (UCI)), higher-layer signaling (for example, RRC signaling, MAC (Medium Access Control) signaling, broadcast information (Master Information Block (MIB), or System Information Block (SIB)), other signals, or by a combination thereof. Moreover, an RRC signalling may be referred to as a RRC message. For example, the RRC message may be an RRC connection setup (RRC Connection Setup) message, a RRC connection reconfiguration (RRC Connection Reconfiguration) message, etc.

Furthermore, each aspect/embodiments described in this specification can be applied to LTE (long term evolution), LTE-A (LTE-advanced), SUPER 3G, IMT-Advanced, 4G, 5G, FRA (Future Radio Access), W-CDMA (registered trademark), GSM (registered trademark), CDMA2000, UMB (ultra mobile broadband), IEEE 802.11 (Wi-Fi), IEEE 802.16 (WiMAX), IEEE 802.20, UWB (Ultra-WideBand), Bluetooth (registered trademark), any other systems using an appropriate system and/or next generation systems expanded on the basis of these systems.

The procedures, sequences, flowcharts, and the like of each embodiment/modified example described in the specification may be exchanged as long as there is no inconsistency. For example, for the methods described in the specification, the elements of the various steps are presented in an exemplary order and are not limited to a specific order presented.

The specific operations that are described in the specification to be performed by the base station apparatus 100 may be performed by their upper nodes in some cases. In a network formed of one or more network nodes including the base station apparatus 100, it is apparent that the various operations performed for communication with the user equipment 200 may be performed by the base station apparatus 100 and/or a network node other than the base station apparatus 100 (e.g., MME or S-GW can be considered, however, not limited to these). In the above description, a case is exemplified in which there is one network node other than the base station apparatus 100. However, it can be a combination of other network nodes (e.g., MME and S-GW) .

Each aspect/embodiment described in this specification may be used alone, may be used in combination, or may be used while being switched during the execution.

The user equipment 200 may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber stations, an access terminal, a mobile terminal, a wireless terminal, a remote terminal, a handset, a user agent, a mobile client, a client, or it may also be called by some other suitable terms.

The base station apparatus 100 may be referred to by one of ordinary skill in the art as NB (NodeB), eNB (enhanced NodeB), gNB, a Base Station, or some other suitable terms.

The terms "determine (determining)" and "decide (determining)" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

The expression "based on" used in the present specification does not mean "based only on" unless as otherwise stated. In other words, the expression "based on" means both "based only on" and "based at least on."

As long as "include," "including," and variations thereof are used in this specification or the claims, the terms are intended to be inclusive in a manner similar to the term "comprising." Furthermore, the term "or" used in the specification or claims is intended not to be an exclusive OR.

In the present disclosure, where an article has been added by translation, for example "a," "an" and "the" in English language, these articles may include more than one unless the context clearly indicates that they are not.

The present invention is described in detail above. It is apparent to a person ordinarily skilled in the art that the present invention is not limited to the embodiments described in the specification. The present invention can be implemented as modifications and alterations without departing from the gist and scope of the present invention that are determined by the descriptions of the claims. Accordingly, the descriptions of the present specification are for the purpose of illustration and do not have any restrictive meaning to the present invention.

This international patent application is based on and claims priority to Japanese Patent Application No. 2018-099225 filed on May 23, 2018, and the entire content of Japanese Patent Application No. 2018-099225 is incorporated herein by reference.

### LIST OF REFERENCE SYMBOLS

- 100: base station apparatus
- 110: transmitting unit
- 120: receiving unit
- 130: configuration information management unit
- 140: network control unit
- 200: user equipment
- 210: transmitting unit
- 220: receiving unit
- 230: configuration information management unit
- 240: transmission power control unit
- 1001: processor
- 1002: storage device
- 1003: auxiliary storage device
- 1004: communication device
- 1005: input device
- 1006: output device

## Claims

1. User equipment comprising:
a control unit that compensates for, by a compensation value related to uplink transmission power capability of the user equipment, a threshold value of a received level that defines a condition for performing measurement for cell selection, and that determines, by the compensated threshold value of the received level, whether the measurement for the cell selection is performed.

2. The user equipment according to claim 1, wherein the compensated threshold value of the received level is a value obtained by subtracting, from the threshold value of the received level, the compensation value related to the uplink transmission power capability of the user equipment.

3. The user equipment according to claim 1, further comprising:
a receiving unit that receives information indicating whether a cell of a base station is an isolated cell.

4. The user equipment according to claim 3, wherein, in response to receiving, by the receiving unit, information indicating whether the cell of the base station is the isolated cell, the control unit compensates for the threshold value of the received level by the compensation value related to the uplink transmission power capability of the user equipment.

5. The user equipment according to claim 4, wherein, when the receiving unit does not receive the information indicating whether the cell of the base station is the isolated cell, the control unit does not compensate for the threshold value of the received level.

6. A base station comprising:
a control unit that compensates for, by a compensation value related to uplink transmission power capability of user equipment, a threshold value of a received level that defines a condition for performing measurement for cell selection; and
a transmitting unit that transmits, to the user equipment, the compensated threshold value of the received level.
